# EUROPÄISCHE PATENTSCHRIFT

(11) **EP 3 320 552 B1**
(45) Veröffentlichungstag und Bekanntmachung des Hinweises auf die Patenterteilung: **01.05.2019**
(21) Anmeldenummer: 15759715.4
(22) Anmeldetag: 28.08.2015
(51) Int. Cl.: H01G 4/40, H01G 11/10, H01G 2/16, H01G 11/16, H02H 3/02, H01G 9/00, H01G 4/38

(54) **KONDENSATORANORDNUNG, HOCHSPANNUNG GLEICHSTROM ÜBERTRAGUNG**
CAPACITOR AGGREGATE, HIGH VOLTAGE DIRECT CURRENT TRANSMISSION
ASSEMBLAGE DE CONDENSATEURS, TRANSMISSION DE COURANT CONTINU À HAUTE TENSION

(43) Veröffentlichungstag der Anmeldung: 16.05.2018
(73) Patentinhaber: Siemens Aktiengesellschaft, 80333 München (DE)
(72) Erfinder: WIETZEL, Stephan, 91052 Erlangen (DE)
(86) Internationale Anmeldenummer: PCT/EP2015/069769
(87) Internationale Veröffentlichungsnummer: WO 2017/036499

(56) Entgegenhaltungen:
- CN-A- 104 134 970
- CN-U- 203 858 989
- CN-Y- 2 935 583

## Beschreibung

Die Erfindung betrifft eine Kondensatoranordnung, umfassend eine Anzahl in Reihe geschalteter Kondensatorelementgruppen, von denen jede eine Mehrzahl parallel geschalteter Kondensatorelemente umfasst.

Kondensatoranordnungen der eingangs genannten Art kommen beispielsweise in Kondensatortürmen/-batterien für Hoch- und Mittelspannung zur Anwendung, wie sie beispielsweise in Stromfiltern für die Hochspannungs-Gleichstrom-Übertragung (HGÜ) verwendet werden. In der Regel werden hierbei eine gewisse Anzahl von Kondensatoranordnungen parallel und eine gewisse Anzahl in Reihe geschaltet. Dokument CN104134970A offenbart eine Kondensatoranordnung, umfassend eine Anzahl in Reihe geschalteter Kondensatorelementgruppen (Ce), von denen jede eine Mehrzahl parallel geschalteter Kondensatorelemente umfasst, wobei die Kondensatorelemente zumindest einer der Kondensatorelementgruppen eine erste Teilmenge und eine zweite Teilmenge von Kondensatorelementen umfassen und die Kondensatorelemente der ersten Teilmenge eine Sicherung aufweisen und die Kondensatorelemente der zweiten Teilmenge auch eine Sicherung aufweisen.

Die Kondensatoranordnungen bestehen in der Regel aus einer Vielzahl von einzelnen Kondensatorelementen, die in einem mit flüssigem Dielektrikum gefüllten Gehäuse angeordnet sind, welches isoliert herausgeführte Anschlüsse aufweist. Eine solche Kondensatoranordnung wird häufig auch als Kondensatorkanne bezeichnet.

Die einzelnen Kondensatorelemente sind dabei üblicherweise in Kondensatorelementgruppen zusammengefasst. Die Kondensatorelemente einer Gruppe sind zueinander parallel geschaltet. Mehrere Gruppen sind dann in der Kondensatoranordnung in Reihe geschaltet.

Bislang wird beim internen Aufbau der Kondensatoranordnungen zwischen solchen mit Kondensatorelementen mit Sicherung und solchen mit Kondensatorelementen ohne Sicherung unterschieden. Weisen die einzelnen Kondensatorelemente keine Sicherungen auf, so führt ein Fehler nur eines Kondensatorelements (in der Regel ein Kurzschluss) zu einem Verschmelzen des Kondensatorelements und damit zu einer elektrischen Verbindung, die die gesamte Kondensatorelementgruppe überbrückt. Dies führt zu einer hohen Kapazitätsänderung der Kondensatoranordnung. Dies führt dazu, dass schon bei einer geringen Anzahl fehlerhafter Kondensatorelemente die Nennkapazität der Kondensatoranordnung soweit verändert ist, dass ein Weiterbetrieb nicht mehr möglich ist.

Eine Abhilfe schafft hier die Verwendung von Kondensatorelementen mit Sicherung. Bei einem Kurzschluss eines Kondensatorelements wird die Sicherung geschmolzen und der Stromfluss durch das Kondensatorelement unterbrochen. Das Kondensatorelement wird somit aus der Kondensatorelementgruppe herausgetrennt, die übrigen Kondensatorelemente der Kondensatorelementgruppe sind weiter funktionstüchtig und es erfolgt nur eine geringe Änderung der Kapazität der gesamten Kondensatoranordnung.

Nachteilig ist in einer derartigen Ausführung jedoch die Gefahr eines Lawineneffekts: Aufgrund der geringen Kapazitätsänderung bei Kondensatorelementfehlern sind diese Fehler schwer von einem Schutzsystem zu erkennen. Wenn mehrere Kondensatorelemente in einer Kondensatorelementgruppe nacheinander fehlerhaft werden und die Sicherungen auslösen, steigt sowohl die Strombelastung in den verbleibenden Sicherungen als auch die Spannungsbelastung in den verbleibenden Kondensatorelementen. Ab einer gewissen Anzahl an fehlerhaften Kondensatorelementen in einer Kondensatorelementgruppe kann somit der bereits benannte Lawineneffekt ausgelöst werden. Wenn dann alle Sicherungen ausgelöst haben, ist der Stromfluss durch die gesamte Kondensatorelementgruppe unterbrochen und es besteht die Gefahr eines Lichtbogens in der Kondensatoranordnung und damit deren Explosion.

Es ist daher Aufgabe der Erfindung, eine Kondensatoranordnung der eingangs genannten Art anzugeben, welche einerseits einen möglichst langen Betrieb auch bei Ausfall einzelner Kondensatorelemente erlaubt, andererseits aber die Gefahr einer Explosion der Kondensatoranordnung minimiert.

Diese Aufgabe wird erfindungsgemäß gelöst, indem die Kondensatorelemente zumindest einer der Kondensatorelementgruppen eine erste Teilmenge und eine zweite Teilmenge von Kondensatorelementen umfassen und die Kondensatorelemente der ersten Teilmenge eine Sicherung aufweisen und die Kondensatorelemente der zweiten Teilmenge keine Sicherung aufweisen. Die Kondensatorelemente der ersten Teilmenge können auch als sicherungsbehaftete Kondensatorelemente oder als sicherungsaufweisende Kondensatorelemente bezeichnet werden. Die Kondensatorelemente der zweiten Teilmenge können auch als sicherungslose Kondensatorelemente oder als sicherungsfreie Kondensatorelemente bezeichnet werden.

Die Erfindung geht dabei von der Überlegung aus, dass ein möglichst langer Weiterbetrieb auch bei einzelnen fehlerhaften Kondensatorelementen einer Kondensatorelementgruppe dadurch erreicht werden könnte, dass möglichst Kondensatorelemente mit Sicherungen verwendet werden, die im Fehlerfall das betreffende Kondensatorelement heraustrennen und keine erhebliche Kapazitätsveränderung der gesamten Kondensatoranordnung erzeugen. Um einen Lawineneffekt mit Heraustrennung der gesamten Kondensatorelementgruppe zu vermeiden, sollte aber auch eine Teilmenge der Kondensatorelemente, d. h. insbesondere mindestens eines der Kondensatorelemente in der Kondensatorelementgruppe ohne Sicherung ausgeführt sein, so dass immer ein Kondensatorelement vorliegt, welches im Fehlerfall eine Überbrückung der jeweiligen Kondensatorelementgruppe erzeugt. Hierdurch wird bei einem Lawineneffekt, bei dem alle Sicherungen öffnen werden, immer eine Überbrückung der Kondensatorelementgruppe erreicht.

Unter einem Kondensatorelement mit Sicherung (sicherungsbehaftetes Kondensatorelement, sicherungsaufweisendes Kondensatorelement) versteht man in diesem Zusammenhang ein Kondensatorelement, das vorteilhafterweise derart ausgelegt ist, dass es nach einer Überbelastung, d. h. in der Regel nach einem Kurzschluss, nichtleitend wird. Dies kann z. B. dadurch erreicht werden, dass dem Kondensator innerhalb des Kondensatorelements eine einfache Schmelzsicherung in Reihe geschaltet ist.

Unter einem Kondensatorelement ohne Sicherung (sicherungsloses Kondensatorelement, sicherungsfreies Kondensatorelement) versteht man in diesem Zusammenhang ein Kondensatorelement, das vorteilhafterweise derart ausgelegt ist, dass es nach einer Überbelastung leitend wird. Dies kann z. B. dadurch erreicht werden, dass der Kondensator, der innerhalb des Kondensatorelements angeordnet ist, so ausgelegt ist, dass er bei einem Kurzschluss verschmilzt und eine leitende Verbindung bildet.

In vorteilhafter Ausgestaltung der Kondensatoranordnung besteht die zumindest eine der Kondensatorelementgruppen aus der ersten Teilmenge und der zweiten Teilmenge von Kondensatorelementen, d. h. es existieren keine weiteren Teilmengen.

In weiterer vorteilhafter Ausgestaltung der Kondensatoranordnung umfassen die Kondensatorelemente jeder der Kondensatorelementgruppen jeweils eine erste Teilmenge und eine zweite Teilmenge von Kondensatorelementen und die Kondensatorelemente der jeweiligen ersten Teilmenge weisen eine Sicherung auf und die Kondensatorelemente der jeweiligen zweiten Teilmenge weisen keine Sicherung auf. Mit anderen Worten: Jede der Kondensatorelementgruppen weist die zwei unterschiedlichen Bauarten von Kondensatorelementen auf, so dass in jeder Kondensatorelementgruppe und damit in der gesamten Kondensatoranordnung eine entsprechende Sicherung gegen einen Lawineneffekt gewährleistet ist.

In noch weiterer vorteilhafter Ausgestaltung der Kondensatoranordnung ist die jeweilige erste Teilmenge, d. h. die Teilmenge der Kondensatorelemente mit Sicherung, größer als die jeweilige zweite Teilmenge. Hierdurch wird die Wahrscheinlichkeit erhöht, dass ein zufällig kurzschließendes Kondensatorelement aus der ersten Teilmenge stammt, d. h. mit Sicherung versehen ist. Dadurch wird die erwartete Zeitspanne erhöht, bis ein Kondensatorelement ohne Sicherung einen Fehler aufweist und die gesamte Kondensatorelementgruppe überbrückt.

Noch vorteilhafter sind die Kondensatorelemente der jeweiligen zweiten Teilmenge, d. h. der Teilmenge der Kondensatorelemente ohne Sicherung, für eine höhere Spannungs- und/oder Strombelastung ausgelegt als die Kondensatorelemente der ersten Teilmenge. Auch hierdurch wird die Wahrscheinlichkeit verringert, dass zunächst Kondensatorelemente ohne Sicherung fehlerhaft werden und es wird erreicht, dass die Kondensatorelementgruppe möglichst lange (wenngleich mit verringerter Kapazität) funktionsfähig bleibt.

In der Kondensatoranordnung sind vorteilhafterweise alle Kondensatorelementgruppen identisch ausgebildet. Dies erleichtert Konstruktion und Auslegung der Kondensatoranordnung.

Eine Kondensatorbatterie umfasst vorteilhafterweise eine Anzahl von oben beschriebenen Kondensatoranordnungen.

Die Nennspannung der Kondensatorbatterie beträgt dabei vorteilhafterweise mehr als 1 kV. Gerade in Mittel- und Hochspannungsbereichen ist die oben beschriebene Ausgestaltung der Kondensatorbatterie von besonderem Vorteil.

Die mit der Erfindung erzielten Vorteile bestehen insbesondere darin, dass durch die Parallelschaltung von Kondensatorelementen mit und ohne Sicherung in den Kondensatorelementgruppen einer Kondensatoranordnung einerseits ein besonders langer Weiterbetrieb der Kondensatoranordnung auch bei einzelnen fehlerhaften Kondensatorelementen gewährleistet wird, andererseits aber auch ein Lawineneffekt mit der Gefahr eines Lichtbogens durch Leitungsunterbrechung einer Kondensatorelementgruppe sicher vermieden wird.

Durch die genannte Konstruktion lässt sich auch das Schutzsystem der Kondensatoranordnung einfacher auslegen: Der Fehlerfall "einzelnes Element" (mit Sicherung) muss durch den Selbstschutz des beschriebenen Designs nicht mehr von einem Schutzsystem erkannt werden. Der Fehlerfall "Kurzschluss Elementgruppe" kann auf Grund der daraus folgenden vergleichsweise hohen Kapazitätsänderung durch ein Schutzsystem vergleichsweise einfach erkannt werden.

Die Erfindung wird anhand einer Zeichnung näher erläutert. Darin zeigen:
- FIG 1: ein Schaltbild einer Kondensatoranordnung mit mehreren Kondensatorelementgruppen mit jeweils Kondensatorelementen mit und ohne Sicherung, und
- FIG 2: ein Schaltbild einer Kondensatorbatterie mit mehreren Kondensatoranordnungen.

Gleiche Teile sind in beiden Figuren mit denselben Bezugszeichen versehen.

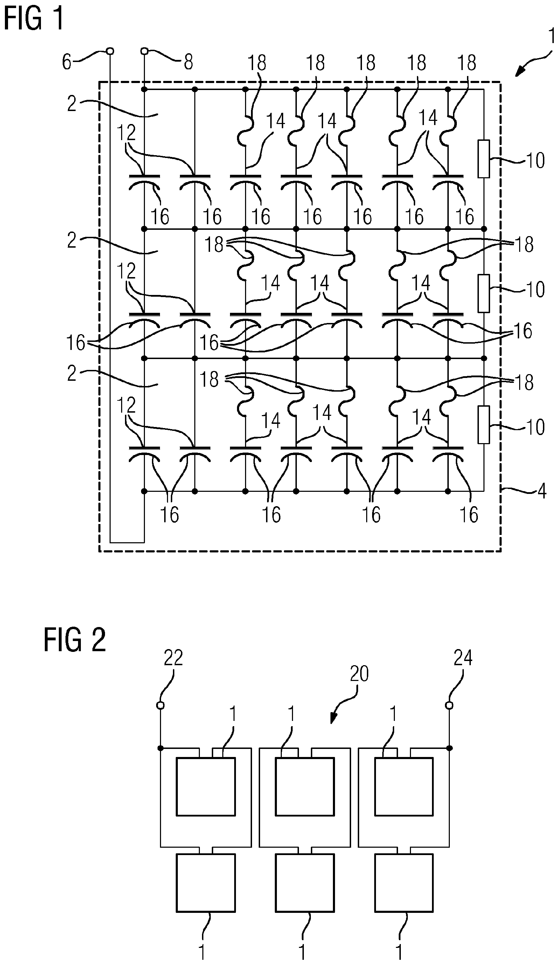

FIG 1 zeigt eine auch als Kondensatorkanne bezeichnete Kondensatoranordnung 1, die insgesamt drei identisch ausgebildete Kondensatorelementgruppen 2 aufweist. Die Kondensatorelementgruppen 2 sind innerhalb eines Gehäuses 4 angeordnet, welches mit einem Dielektrikum gefüllt ist. An seiner Außenseite weist das Gehäuse 4 zwei elektrische Anschlussklemmen 6, 8 auf, zwischen denen die Kondensatorelementgruppen 2 in der Kondensatoranordnung 1 in Reihe geschaltet sind. Jeder Kondensatorelementgruppe 2 ist dabei noch ein Entladewiderstand 10 parallel geschaltet.

Jede Kondensatorelementgruppe 2 besteht im Ausführungsbeispiel aus sieben parallel geschalteten Kondensatorelementen 12, 14, davon zwei als Kondensatorelemente ohne Sicherung 12 und fünf als Kondensatorelemente mit Sicherung 14. Kondensatorelemente ohne Sicherung 12 bestehen dabei lediglich aus einem Kondensator 16, Kondensatorelemente mit Sicherung 14 bestehen aus einem Kondensator 16 mit in Reihe geschalteter Sicherung 18. Diese ist als Schmelzsicherung ausgeführt.

Die Kondensatoren 16 der Kondensatorelemente ohne Sicherung 12 können in einer Ausführungsform für eine höhere Belastbarkeit bezüglich Strom und Spannung ausgelegt sein, schließen also weniger schnell kurz als die Kondensatoren 16 der Kondensatorelemente mit Sicherung 14. Die führt in Kombination mit der größeren Anzahl von Kondensatorelementen mit Sicherung 14 in jeder Kondensatorelementgruppe 2 dazu, dass in Folge des laufenden Verschleißes und der Belastung über die Betriebszeit der Kondensatoranordnung 1 es zunächst in den Kondensatorelementen mit Sicherung 14 zu einem Kurzschluss im jeweiligen Kondensator 16 kommt und diese fehlerhaft werden. Durch den Kurzschluss schmilzt die jeweilige Sicherung 18 und das Kondensatorelement 14 wird unterbrochen und aus der Kondensatorelementgruppe 2 herausgetrennt. Dies hat nur eine vergleichsweise geringe Kapazitätsänderung zur Folge, allerdings steigt die Strombelastung der übrigen Kondensatorelemente 12, 14 in der Kondensatorelementgruppe 2.

Kommt es zu weiteren Ausfällen, ggf. aus in der Art einer Lawine, wenn zu viele Kondensatoren 16 einer Kondensatorelementgruppe 2 kurzschließen und die Belastung für die übrigen Kondensatorelemente 12, 14 zu hoch wird, so wird schließlich auch ein Kondensatorelement ohne Sicherung 12 kurzschließen. Der Kondensator 16 verschmilzt und durch das Fehlen einer Sicherung 18 wird das Kondensatorelement 12 leitend. Es überbrückt damit die gesamte Kondensatorelementgruppe 2.

Die in FIG 1 gezeigte Kondensatoranordnung 1 weist somit einerseits eine besonders lange Lebensdauer auf, da Fehler in den Kondensatorelementen mit Sicherung 14, die zudem aufgrund der beschriebenen Konstruktion wahrscheinlicher sind, als Fehler in den Kondensatorelementen ohne Sicherung 12, den Weiterbetrieb der Kondensatoranordnung 1 mit nur geringfügiger Kapazitätsänderung ermöglichen. Andererseits werden durch die Kondensatorelemente ohne Sicherung 12 ein Lichtbogen und eine Explosion der Kondensatoranordnung sicher vermieden. Durch diese Selbstsicherung kann ein nicht näher dargestelltes Schutzsystem einfacher ausgeführt werden: Dieses muss lediglich die vergleichsweise hohe Kapazitätsänderung durch die beschriebene Überbrückung einer Kondensatorelementgruppe 2 erfassen und melden, der Ausfall einzelner Kondensatorelemente mit Sicherung 14, der durch die geringe Kapazitätsänderung technisch schwieriger zu ermitteln ist, muss nicht erfasst werden.

In FIG 2 ist schematisch eine Kondensatorbatterie 20 für Mittel- und Hochspannungsanwendungen über 1 kV gezeigt, wie sie z. B. in Stromrichtern für Hochspannungs-Gleichstrom-Übertragung verwendet wird. Zwischen den elektrischen Anschlüssen 22, 24 der Kondensatorbatterie 20 sind in zwei parallelen Ästen jeweils drei Kondensatoranordnungen 1 der in FIG 1 beschriebenen Art in Reihe geschaltet.

## Patentansprüche

1. Kondensatoranordnung (1), umfassend eine Anzahl in Reihe geschalteter Kondensatorelementgruppen (2), von denen jede eine Mehrzahl parallel geschalteter Kondensatorelemente (12, 14) umfasst, wobei die Kondensatorelemente (12, 14) zumindest einer der Kondensatorelementgruppen (2) eine erste Teilmenge und eine zweite Teilmenge von Kondensatorelementen (12, 14) umfassen und die Kondensatorelemente (14) der ersten Teilmenge eine Sicherung (18) aufweisen und die Kondensatorelemente (12) der zweiten Teilmenge keine Sicherung (18) aufweisen.

2. Kondensatoranordnung (1) nach Anspruch 1, bei der die Kondensatorelemente mit Sicherung (14) derart ausgelegt sind, dass das Kondensatorelement (14) nach einer Überbelastung nichtleitend wird.

3. Kondensatoranordnung (1) nach einem der vorhergehenden Ansprüche, bei der die Kondensatorelemente ohne Sicherung (12) derart ausgelegt sind, dass das Kondensatorelement (12) nach einer Überbelastung leitend wird.

4. Kondensatoranordnung (1) nach einem der vorhergehenden Ansprüche, bei der die zumindest eine der Kondensatorelementgruppen (2) aus der ersten Teilmenge und der zweiten Teilmenge von Kondensatorelementen (12, 14) besteht.

5. Kondensatoranordnung (1) nach einem der vorhergehenden Ansprüche, bei der die Kondensatorelemente (12, 14) jeder der Kondensatorelementgruppen (2) jeweils eine erste Teilmenge und eine zweite Teilmenge von Kondensatorelementen (12, 14) umfassen und die Kondensatorelemente (14) der jeweiligen ersten Teilmenge eine Sicherung (18) aufweisen und die Kondensatorelemente (12) der jeweiligen zweiten Teilmenge keine Sicherung (18) aufweisen.

6. Kondensatoranordnung (1) nach einem der vorherigen Ansprüche, bei der die jeweilige erste Teilmenge größer ist als die jeweilige zweite Teilmenge.

7. Kondensatoranordnung (1) nach einem der vorherigen Ansprüche, bei der die Kondensatorelemente (12) der jeweiligen zweiten Teilmenge für eine höhere Spannungs- und/oder Strombelastung ausgelegt sind als die Kondensatorelemente (14) der ersten Teilmenge.

8. Kondensatoranordnung (1) nach einem der vorherigen Ansprüche, bei der alle Kondensatorelementgruppen (2) identisch ausgebildet sind.

9. Kondensatorbatterie (20) mit einer Anzahl von Kondensatoranordnungen (1) nach einem der vorherigen Ansprüche.

10. Kondensatorbatterie (20) nach Anspruch 9, deren Nennspannung mehr als 1 kV beträgt.

## Claims

1. Capacitor assembly (1) comprising a number of series-connected capacitor-element groups (2), each of which comprises a plurality of parallel-connected capacitor elements (12, 14), wherein the capacitor elements (12, 14) of at least one of the capacitor-element groups (2) comprise a first subset and a second subset of capacitor elements (12, 14), and the capacitor elements (14) of the first subset exhibit a fuse (18), and the capacitor elements (12) of the second subset exhibit no fuse (18).

2. Capacitor assembly (1) according to Claim 1, in which the capacitor elements with a fuse (14) have been designed in such a manner that after an overload the capacitor element (14) becomes non-conducting.

3. Capacitor assembly (1) according to one of the preceding claims, in which the capacitor elements without a fuse (12) have been designed in such a manner that after an overload the capacitor element (12) becomes conducting.

4. Capacitor assembly (1) according to one of the preceding claims, in which the at least one of the capacitor-element groups (2) consists of the first subset and the second subset of capacitor elements (12, 14).

5. Capacitor assembly (1) according to one of the preceding claims, in which the capacitor elements (12, 14) of each of the capacitor-element groups (2) each comprise a first subset and a second subset of capacitor elements (12, 14), and the capacitor elements (14) of the respective first subset exhibit a fuse (18), and the capacitor elements (12) of the respective second subset exhibit no fuse (18).

6. Capacitor assembly (1) according to one of the preceding claims, in which the respective first subset is larger than the respective second subset.

7. Capacitor assembly (1) according to one of the preceding claims, in which the capacitor elements (12) of the respective second subset have been designed for a higher voltage load and/or current load than the capacitor elements (14) of the first subset.

8. Capacitor assembly (1) according to one of the preceding claims, in which all the capacitor-element groups (2) are identical.

9. Capacitor bank (20) with a number of capacitor assemblies (1) according to one of the preceding claims.

10. Capacitor bank (20) according to Claim 9, the rated voltage of which amounts to more than 1 kV.

## Revendications

1. Agencement (1) de condensateur, comprenant un certain nombre de groupes (2) d'éléments de condensateur montés en série, dont chacun comprend une pluralité d'éléments (12, 14) de condensateur montés en parallèle, dans lequel les éléments (12, 14) de condensateur d'au moins l'un des groupes (2) d'éléments de condensateur comprennent un premier sous-ensemble et un deuxième sous-ensemble d'éléments (12, 14) de condensateur et les éléments (14) de condensateur du premier sous-ensemble ont un fusible (18) et les éléments (12) de condensateur du deuxième sous-ensemble n'ont pas de fusible (18).

2. Agencement (1) de condensateur suivant la revendication 1, dans lequel les éléments de condensateur ayant un fusible (14) sont conçus de manière à ce que l'élément (14) de condensateur devienne non conducteur après une surcharge.

3. Agencement (1) de condensateur suivant l'une des revendications précédentes, dans lequel les éléments de condensateur sans fusible (12) sont conçus de manière à ce que l'élément (12) de condensateur devienne conducteur après une surcharge.

4. Agencement (1) de condensateur suivant l'une des revendications précédentes, dans lequel le au moins un des groupes (2) d'éléments de condensateur est constitué du premier sous-ensemble et du deuxième sous-ensemble d'éléments (12, 14) de condensateur.

5. Agencement (1) de condensateur suivant l'une des revendications précédentes, dans lequel les éléments (12, 14) de condensateur de chacun des groupes (2) d'éléments de condensateur comprennent chacun un premier sous-ensemble et un deuxième sous-ensemble d'éléments (12, 14) de condensateur et les éléments (14) de condensateur du premier sous-ensemble respectif ont un fusible (18) et les éléments (12, 14) de condensateur de, respectivement, l'autre sous-ensemble n'ont pas de fusible (18).

6. Agencement (1) de condensateur suivant l'une des revendications précédentes, dans lequel le premier sous-ensemble respectif est plus grand que le deuxième sous-ensemble respectif.

7. Agencement (1) de condensateur suivant l'une des revendications précédentes, dans lequel les éléments (12) de condensateur du deuxième sous-ensemble respectifs sont conçus pour une charge en tension et/ou en courant plus grande que les éléments (14) de condensateur du premier sous-ensemble.

8. Agencement (1) de condensateur suivant l'une des revendications précédentes, dans lequel tous les groupes (2) d'éléments de condensateur sont pareils.

9. Batterie (20) de condensateur ayant un certain nombre d'agencements (1) de condensateur suivant l'une des revendications précédentes.

10. Batterie (20) de condensateur suivant la revendication 9, dont la tension nominale est supérieure à 1 kV.
